# EUROPÄISCHE PATENTSCHRIFT

(11) **EP 2 981 868 B1**
(45) Veröffentlichungstag und Bekanntmachung des Hinweises auf die Patenterteilung: **09.08.2017**
(21) Anmeldenummer: 14716265.5
(22) Anmeldetag: 02.04.2014
(51) Int. Cl.: G05B 19/042

(54) **STEUER- UND DATENÜBERTRAGUNGSANLAGE, PROZESSEINRICHTUNG UND VERFAHREN ZUR REDUNDANTEN PROZESSSTEUERUNG MIT DEZENTRALER REDUNDANZ**
CONTROL AND DATA TRANSMISSION SYSTEM, PROCESS DEVICE AND METHOD FOR REDUNDANT PROCESS CONTROL WITH DECENTRALIZED REDUNDANCY
SYSTÈME DE COMMANDE ET DE TRANSMISSION DE DONNÉES, DISPOSITIF DE TRAITEMENT ET PROCÉDÉ DE COMMANDE DE PROCESSUS REDONDANTE À REDONDANCE DÉCENTRALISÉE

(30) Priorität: 04.04.2013 DE 102013103380
(43) Veröffentlichungstag der Anmeldung: 10.02.2016
(73) Patentinhaber: Phoenix Contact GmbH & Co. KG, 32825 Blomberg (DE)
(72) Erfinder: BIBELHAUSEN, Volker, 32760 Detmold (DE); BRAND, Andre, 32825 Blomberg (DE); HEUTGER, Henning, 31812 Bad Pyrmont (DE)
(74) Vertreter: Blumbach Zinngrebe
(86) Internationale Anmeldenummer: PCT/EP2014/056629
(87) Internationale Veröffentlichungsnummer: WO 2014/161909

(56) Entgegenhaltungen:
- DE-A1- 19 929 804

## Beschreibung

Die Erfindung betrifft allgemein die Automatisierungstechnik, uns insbesondere eine Steuer- und Datenübertragungsanlage mit wenigstens einer Steuereinrichtung, welche über ein Kommunikationsnetzwerk mit wenigstens einer als Ein- und/oder Ausgabegerät ausgebildeten Prozesseinrichtung verbunden ist, sowie ein Verfahren zur redundanten Prozesssteuerung.

In der Automatisierungstechnik werden bei Applikationen, die hochverfügbar ausgelegt sind, wie zum Beispiel eine Tunnelüberwachung, sogenannte Redundanzsteuerungen verwendet. Dabei steuert eine Steuereinrichtung, üblicherweise auch als Steuerung oder Controller bezeichnet, den Prozess und die andere Steuereinrichtung läuft im Standby-Betrieb, um beim Eintreten bestimmter Ereignisse die Prozesskontrolle übernehmen zu können. Der Programmablauf wird dabei zwischen den Steuereinrichtungen über eine Synchronisationsverbindung abgeglichen, damit der Prozess nach einer Umschaltung in gleicher Weise weiter gesteuert werden kann. Neben dieser Synchronisation des Anwenderprogramms werden auch weitere Informationen zwischen den Steuereinrichtungen ausgetauscht, um den konsistenten Betrieb sicher zu stellen. Jede der Steuereinrichtungen muss über den Zustand und Funktion der anderen informiert sein, um den eigenen Ablauf darauf abzustimmen.

Ein entsprechendes Redundanzsteuerungssystem umfasst im allgemeinen zwei Steuereinrichtungen, die untereinander synchronisiert sind, sowie unterlagerte Eingabe-/ Ausgabe-Stationen, die über ein entsprechendes Kommunikationsnetzwerk an beide Steuerungen angebunden sind.

Aus DE 100 30 329 C1 ist beispielsweise ein redundantes Steuerungssystem mit Steuerrechnern und einer Peripherieeinheit bekannt, bei welchem die Steuerrechner zyklisch wechselnde Lebenszeichen ausgeben, wobei die Peripherieeinheit bei Ausbleiben eines Lebenszeichenwechsels auf den jeweils anderen Steuerrechner umschaltet.

In DE 10 2006 047 026 B4 wird ferner eine Steuer- und Datenübertragungsanlage mit wenigstens zwei Steuereinrichtungen und wenigstens einer Slaveeinrichtung, welche über ein Kommunikationsnetzwerk miteinander verbunden sind, beschrieben, wobei die Slaveeinrichtung mehrere adressierbare Ausgangsschnittstellen zum Empfang von Ausgangs- und Statusdaten enthält und jede Steuereinrichtung eine Einrichtung zum Erzeugen und Übertragen von Status- und Ausgangsdaten zu einer separaten Ausgangsschnittstelle der Slaveeinrichtung aufweist, und wobei die Slaveeinrichtung eine Auswerteeinrichtung aufweist, die unter Ansprechen auf die von den Steuereinrichtungen empfangenen Statussignale die Weiterleitung von empfangenen Ausgangsdaten zur weiteren Verwendung steuert.

Sollte es zu einem Ausfall eines redundant aufgebauten Steuerungssystems kommen, d.h. zu einem Ausfall beider redundanter Steuereinrichtungen, so kann der unterlagerte Prozess nicht mehr bedient werden, da keine Steuerung mehr die Eingangs- und Ausgangsdaten bearbeiten kann. Gleiches gilt für einen Ausfall des Kommunikationsnetzwerkes.

In D1 DE 199 29 804 A1 wird ferner ein Steuerungssystem mit zentralen und/oder dezentralen Baugruppen beschrieben, an denen Schutzeinrichtungen wie Sensoren und/oder Aktoren angeschlossen sind, wobei jede Baugruppe insbesondere eine eigenständige Funktionsintelligenz mit eigenen Software-Routinen aufweist, die dazu dienen, trotz einer Störung bestimmte oder alle Funktionszustände der betreffenden Baugruppe zu erhalten und/oder zusätzliche Funktionszustände der betreffenden Baugruppe einzuleiten.

Der Erfindung liegt die Aufgabe zugrunde, einen Weg aufzuzeigen, wie ein Verfahren und eine Steuer- und Datenübertragungsanlage zur redundanten Prozessteuerung vereinfacht und/oder verbessert werden kann, und wie insbesondere Nachteile der aus dem Stand der Technik bekannten Lösungen vermieden oder reduziert werden können.

Ein Kerngedanke der Erfindung ist darin zu sehen, eine als Eingabe- und/oder Ausgabegerät ausgebildete Prozesseinrichtung, welche im Normalbetrieb von wenigstens einer Steuereinrichtung angesteuert wird, mit einer eigenen Intelligenz auszustatten, um einen Notbetrieb der Prozesseinrichtung für den Fall aufrecht erhalten zu können, dass eine Ansteuerung durch die Steuereinrichtung nicht mehr gewährleistet ist, wobei die Prozesseinrichtung zu diesem Zweck mit einem Laufzeitsystem ausgestattet ist, um ein in der Prozesseinrichtung hinterlegtes Ablaufprogramm zur Notsteuerung auszuführen.

Das oben genannte technische Problem wird zum einen durch die Merkmale des Anspruchs 1 gelöst.

Danach ist eine Steuer- und Datenübertragungsanlage zur redundanten Prozesssteuerung mit wenigstens einer Steuereinrichtung und wenigstens einer als Ein- und/oder Ausgabegerät ausgebildeten Prozesseinrichtung vorgesehen, welche im Normalbetrieb über ein Kommunikationsnetzwerk miteinander verbunden sind. Angemerkt sei an dieser Stelle, dass es sich bei der Steuer- und Datenübertragungsanlage um eine Automatisierungsanlage und bei der Prozesseinrichtung um ein Feldgerät handeln kann. Ferner kann es sich bei der Steuereinrichtung beispielsweise um eine speicherprogrammierbare Steuerung (SPS) handeln.

Die Prozesseinrichtung umfasst eine zum Detektieren eines Steuerungsausfalls ausgebildete Auswerteeinheit, ein in einem Speicher der Prozesseinrichtung gespeichertes, parametrierbares Not-Steuerprogramm, und ein zum Ausführen des Not-Steuerprogramms ausgebildetes Laufzeitsystem, wobei die Prozesseinrichtung dazu ausgebildet ist, unter Ansprechen auf einen durch die Auswerteeinheit detektierten Steuerungsausfall in einen Notbetrieb zu wechseln, in welchem die Prozesseinrichtung das Not-Steuerprogramm ausführt.

In einer besonders bevorzugten Ausführungsform umfasst die Steuer- und Datenübertragungsanlage wenigstens eine erste Steuereinrichtung und eine zweite, zur ersten redundante Steuereinrichtung, wobei im Normalbetrieb beide Steuereinrichtungen mit der Prozesseinrichtung verbunden sind, und wobei die Prozesseinrichtung nur dann in den Notbetrieb wechselt, wenn die Auswerteeinheit für beide Steuereinrichtungen einen Steuerungsausfall detektiert.

Ein Steuerungsausfall wird von der Auswerteeinheit für eine Steuereinrichtung vorzugsweise dann detektiert, wenn für eine vorgegebene Zeitdauer kein Signal von der Steuereinrichtung empfangen wurde, wobei hierdurch sowohl der Ausfall der Kommunikationsverbindung zwischen Steuereinrichtung und Prozesseinrichtung als auch ein Ausfall der Steuereinrichtung erkannt wird. Es kann jedoch auch ein Fehlerfall auftreten, in welchem die Steuereinrichtung eine Funktionsstörung aufweist, aber weiterhin fehlerhafte Datentelegramme sendet. Für die Erkennung eines solchen Fehlerfalls kann von der Auswerteeinheit vorteilhaft ein Steuerungsausfall detektiert werden, wenn von der Steuereinrichtung ein fehlerhaftes Signal empfangen wurde. Zur Erkennung eines fehlerhaften Signals kann beispielsweise vorgesehen sein, dass von der Steuereinrichtung zur Prozesseinrichtung übertragene Datentelegramme mit einer Prüfsumme und/oder einer fortlaufenden Kennung versehen werden, welche durch die Auswerteinheit geprüft werden. Für den Fall, dass eine Steuereinrichtung selbst eine eigene Funktionsstörung erkennt, kann ferner von der Auswerteeinheit ein Steuerungsausfall detektiert werden, wenn von der Steuereinrichtung ein Statussignal empfangen wurde, welches einen Ausfall der Steuereinrichtung signalisiert.

Es sei angemerkt, dass die Auswerteeinheit vorzugsweise dazu ausgebildet ist, im Normalbetrieb empfangene Ausgangsdaten an eine physikalische Schnittstelle der Prozesseinrichtung weiterzuleiten und/oder über eine physikalische Schnittstelle eingelesene Eingangsdaten an eine oder an mehrere redundante, überlagerte Steuereinrichtungen weiterzuleiten.

Im einfachsten Fall dient das Not-Steuerprogramm dazu, die Prozesseinrichtung beziehungsweise den durch die Prozesseinrichtung gesteuerten Teilprozess in einen definierten sicheren Zustand zu überführen, um kritische Anlagenzustände oder andere Gefahrensituationen zu vermeiden.

Besonders vorteilhaft dient das von der Prozesseinrichtung ausgeführte Not-Steuerprogramms aber zur fortgesetzten Prozesssteuerung, wobei die Logik des Not-Steuerprogramms nicht mit der des überlagerten Systems, d.h. mit der Logik des von den Steuereinrichtungen ausgeführten Steuerprogramms, übereinstimmen muss. Dies bedeutet, dass im Notbetrieb eine andere Funktionalität als im Normalbetrieb vorgesehen sein kann. Auch kann das Not-Steuerprogramm eine gegenüber einem von den Steuereinrichtungen ausgeführten Steuerprogramm reduzierte Funktionalität aufweisen.

Je nach Ausgestaltung des Laufzeitsystems der Prozesseinrichtung kann das als Not-Steuerprogramm bereitgestellte Ablaufprogramm beispielsweise in IEC 61131-Syntax oder einer Programmier-Hochsprache erstellt sein.

Zum Zweck der fortgesetzten Prozesssteuerung ist die Prozesseinrichtung besonders vorteilhaft dazu ausgebildet, im Notbetrieb über das Kommunikationsnetzwerk Daten mit wenigstens einer weiteren Prozesseinrichtung auszutauschen, wobei insbesondere Daten, welche die Prozesseinrichtung von der weiteren Prozesseinrichtung empfängt, als Eingangsdaten dem Not-Steuerprogramm zugeführt und/oder vom Not-Steuerprogramm erzeugte Ausgangsdaten von der Prozesseinrichtung zu der weiteren Prozesseinrichtung übertragen werden.

Da ein direkter Datenaustausch zwischen unterschiedlichen Prozesseinrichtungen nur im Notbetrieb bei Ausfall der überlagerten Steuerung erforderlich ist, ist die Prozesseinrichtung vorzugsweise dazu ausgebildet, die Kommunikationsverbindung zu der wenigstens einen weiteren Prozesseinrichtung erst während des Notbetriebs aufzubauen.

Durch den Datenaustausch zwischen unterschiedlichen Prozesseinrichtungen wird besonders vorteilhaft ein abgestimmter Notbetrieb über eine gesamte Automatisierungsanlage oder über einen Teilbereich einer Automatisierungsanlage ermöglicht. Das von der Prozesseinrichtung ausgeführte Not-Steuerprogramm kann vorteilhaft auch dazu ausgebildet sein, wenigstens eine weitere Prozesseinrichtung in einen sicheren Betriebszustand zu überführen.

Vorteilhaft ist die Prozesseinrichtung dazu ausgebildet, automatisch vom Notbetrieb wieder in den Normalbetrieb umzuschalten, sobald die Auswerteinheit eine funktionsfähige Steuerungseinrichtung detektiert. Dies kann beispielsweise der Fall sein, sobald erneut eine fehlerfreie Datennachricht von einer Steuerungseinrichtung empfangen wird. Bei Umschalten vom Notbetrieb auf den Normalbetrieb wird die Ausführung des Not-Steuerprogramms beendet.

In einer bevorzugten Ausführungsform umfasst die Steuer- und Datenübertragungsanlage ferner eine mit dem Kommunikationsnetzwerk verbundene Einrichtung zum Bedienen und/oder Beobachten, welche dazu ausgebildet ist, im Normalbetrieb mit der wenigstens einen Steuereinrichtung und im Notbetrieb mit der Prozesseinrichtung zu kommunizieren. Vorzugsweise ist die Einrichtung zum Bedienen und/oder Beobachten als OPC-Server (OPC: OLE (Object Linking and Embedding) for Process Control) mit daran angeschlossenem OPC-Client ausgebildet.

Die oben beschriebenen Ausführungsformen einer Steuer- und Datenübertragungsanlage können mit Vorteil in beliebiger Weise kombiniert werden.

Das oben genannte technische Problem wird auch durch die Merkmale des Anspruchs 8 gelöst.

Danach ist eine als Ein- und/oder Ausgabegerät, insbesondere als Feldgerät, ausgebildete Prozesseinrichtung vorgesehen, welche über ein Kommunikationsnetzwerk mit wenigstens einer Steuereinrichtung verbindbar und dazu ausgebildet ist, im Normalbetrieb von der Steuereinrichtung angesteuert zu werden, und welche eine zum Detektieren eines Steuerungsausfalls ausgebildete Auswerteeinheit, ein in einem Speicher der Prozesseinrichtung gespeichertes, parametrierbares Not-Steuerprogramm, und ein zum Ausführen des Not-Steuerprogramms ausgebildetes Laufzeitsystem umfasst, wobei die Prozesseinrichtung dazu ausgebildet ist, unter Ansprechen auf einen durch die Auswerteeinheit detektierten Steuerungsausfall in einen Notbetrieb zu wechseln, in welchem die Prozesseinrichtung das Not-Steuerprogramm ausführt.

Ferner liegen auch alle oben im Zusammenhang mit der Steuer- und Datenübertragungsanlage beschriebenen Ausführungsformen einer solchen Prozesseinrichtung ebenfalls im Rahmen der Erfindung.

Das oben genannte technische Problem wird ferner durch die Merkmale des Anspruchs 9 gelöst.

Danach ist ein Verfahren zur redundanten Prozesssteuerung vorgesehen, bei welchem im Normalbetrieb wenigstens eine als Ein- und/oder Ausgabegerät ausgebildete Prozesseinrichtung von wenigstens einer mit der Prozesseinrichtung über ein Kommunikationsnetzwerk verbundenen Steuereinrichtung angesteuert wird, ein Steuerungsausfall mittels einer Auswerteeinheit der Prozesseinrichtung detektiert wird, und die Prozesseinrichtung unter Ansprechen auf einen durch die Auswerteeinheit detektierten Steuerungsausfall in einen Notbetrieb wechselt, in welchem die Prozesseinrichtung mittels eines Laufzeitsystems ein in einem Speicher der Prozesseinrichtung gespeichertes, parametrierbares Not-Steuerprogramm ausführt.

Vorzugsweise umfasst das Verfahren alle erforderlichen Verfahrensschritte zum Betreiben der oben beschriebenen Ausführungsformen einer Steuer- und Datenübertragungsanlage oder deren Kombination.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile. Es zeigen:
- Fig. 1: eine schematische Darstellung einer bevorzugten Ausführungsform eines Steuer- und Datenübertragungsanlage, und
- Fig. 2: eine schematische Darstellung einer weiteren bevorzugten Ausführungsform eines Steuer- und Datenübertragungsanlage.

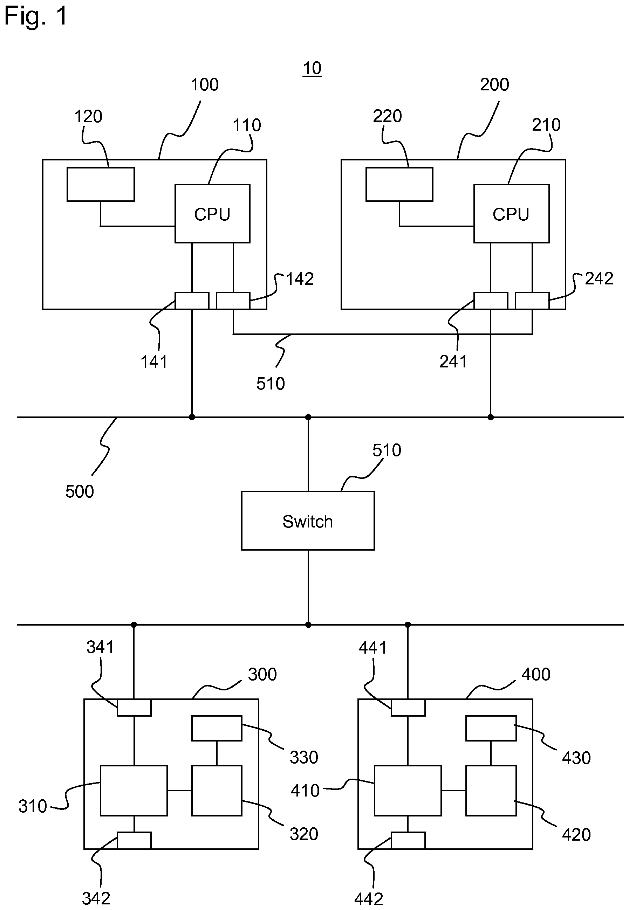

In Fig. 1 ist eine beispielhafte Steuer- und Datenübertragungsanlage 10 dargestellt, die beispielsweise in der Automatisierungstechnik oder der Tunnelüberwachung zum Einsatz kommt. Im dargestellten Ausführungsbeispiel umfasst die Steuer- und Datenübertragungsanlage 10 zwei redundante Steuereinrichtungen 100 und 200, die über ein Kommunikationsnetzwerk 500 mit Prozesseinrichtungen 300 und 400 verbunden sind. Das Kommunikationsnetzwerk 500 kann weitere Komponenten wie beispielsweise den dargestellten Switch 510 umfassen, und ist im dargestellten Ausführungsbeispiel als PROFINET-Kommunikationsnetz ausgebildet. PROFINET (Process Field Network) ist ein im Bereich der Automatisierung eingesetzter offener Industrial Ethernet-Standard. Es kann aber auch jedes andere geeignete Kommunikationsnetzwerk, wie zum Beispiel ein Feldbus, eingesetzt werden.

Die Steuereinrichtungen 100 und 200 umfassen jeweils einen Speicher 120 bzw. 220, in welchem jeweils ein Steuerprogramm gespeichert ist, welches jeweils mittels eines Prozessors 110 bzw. 210 ausführbar ist. Die Steuereinrichtungen 100 und 200 sind jeweils über eine Ethernet-Schnittstelle 141 bzw. 241 an das PROFINET-Netzwerk 500 angeschlossen. Ferner sind die Steuereinrichtungen 100 und 200 mittels zusätzlicher Schnittstellen 142 und 242 über eine Direktverbindung 510 miteinander verbunden. Die Direktverbindung 510 kann beispielsweise als Ethernet-basierte Lichtwellenleiter (LWL)-Verbindung und die Schnittstellen 142 und 242 dementsprechend als LWL-Schnittstellen ausgebildet sein. Es liegt aber auch jede andere geeignete Art einer Direktverbindung im Rahmen der Erfindung. Über die Verbindung 510 erfolgt in an sich bekannter Weise eine Synchronisation der von den Steuereinrichtungen 100 und 200 jeweils ausgeführten Steuerprogrammen. Ferner können über die Verbindung 510 Statusdaten ausgetauscht werden, so dass die Steuereinrichtungen jeweils über den Betriebszustand der jeweils anderen Steuereinrichtung informiert sind und einen Ausfall der jeweils anderen Steuereinrichtung erkennen können.

Die Prozesseinrichtungen 300 und 400, im Folgenden auch als Feldgeräte bezeichnet, sind als Eingabe-/Ausgabe-Stationen ausgebildet, wobei über die Schnittstellen 342 bzw. 442 eine Anbindung an den zu steuernden Prozess erfolgt, wobei insbesondere Sensoren und/oder Aktoren an die Schnittstellen 342 bzw. 442 angeschlossen sind. Im Folgenden wird beispielhaft davon ausgegangen, dass an die Schnittstelle 342 des Feldgerätes 300 ein Sensor und an die Schnittstelle 442 des Feldgerätes 400 ein Aktor angeschlossen ist. Die Prozesseinrichtungen 300 und 400 sind jeweils über die Schnittstellen 341 bzw. 441 an das Kommunikationsnetz 500 angeschlossen und damit mit den Steuereinrichtungen 100 und 200 verbunden.

Der Prozess wird jeweils von einer der Steuereinrichtungen 100 oder 200 als aktive Steuereinrichtung gesteuert, wobei im Bedarfsfall auf die andere Steuereinrichtung umgeschaltet werden kann. Es kann vorgesehen sein, dass nur die jeweils aktive Steuereinrichtung Ausgangsdaten zu den entsprechenden Feldgeräten überträgt. Alternativ kann auch vorgesehen sein, dass beide Steuereinrichtungen parallel Ausgangsdaten übertragen und die Feldgeräte aufgrund zusätzlich übertragener Statusdaten entscheiden, welche Ausgangsdaten weiterzuleiten sind. In diesem Fall umfassen die Schnittstellen 341 bzw. 441 jeweils eine separate logische Schnittstelle für jede der Steuereinrichtungen 100 und 200.

Im Normalbetrieb werden die von der Prozesseinrichtung 400 empfangenen Ausgangsdaten direkt an den an der Schnittstelle 442 angeschlossenen Aktor weitergegeben und von der Prozesseinrichtung 300 die von dem an die Schnittstelle 342 angeschlossenen Sensor gelesenen Eingangsdaten an die überlagerten Steuereinrichtungen 100 und 200 gesendet.

Angemerkt sei an dieser Stelle, dass auch mehr als zwei Steuereinrichtungen Daten mit den Feldgeräten 300 und 400 austauschen können. Es kann aber auch auf eine Redundanz der Steuereinrichtungen verzichtet werden und nur eine Steuereinrichtung vorgesehen sein. Ferner sei angemerkt, dass die Steuer- und Datenübertragungsanlage 10 in der Regel mehr als nur die zwei dargestellten Prozesseinrichtungen 300 und 400 enthält, wobei an eine Prozesseinrichtung auch eine Mehrzahl von Sensoren und/oder Aktoren angeschlossen sein kann.

Kommt es zu einer Kommunikationsunterbrechung zwischen den überlagerten Steuereinrichtungen und einer der Prozesseinrichtungen 300 oder 400, so wird dieser Fehlerfall durch die Auswerteinheit 310 bzw. 410 der jeweiligen Prozesseinrichtung erkannt, beispielsweise durch Erkennen, dass eine vorkonfigurierte Überwachungszeit abgelaufen ist. Ein Fehlerfall kann auch erkannt werden, wenn von einer Steuereinrichtung ein fehlerhaftes Signal empfangen wurde, oder wenn von einer Steuereinrichtung ein Statussignal empfangen wurde, welches einen Ausfall einer Steuereinrichtung signalisiert. Vorzugsweise wird bei redundanten Steuereinrichtungen ein Fehler nur dann erkannt, wenn beide Steuereinrichtungen ausgefallen sind bzw. die Kommunikation zu beiden Steuereinrichtungen unterbrochen ist.

Erfindungsgemäß wird die Verfügbarkeit der Steuer- und Datenübertragungsanlage 10 dadurch erhöht, dass wenigstens eine der Prozesseinrichtungen 300 bzw. 400 ein zur Ausführung eines Notprogramms ausgebildetes eigenes Laufzeitsystem aufweist und auf diese Weise als intelligente E/A-Station ausgebildet ist.

Unter Ansprechen auf das Erkennen eines Fehlerfalls wird dementsprechend das Laufzeitsystem 320 bzw. 420 der jeweiligen Prozesseinrichtung 300 bzw. 400, welche den Fehlerfall erkannt hat, aktiviert und ein zuvor parametriertes, im Speicher 330 bzw. 430 gespeichertes Ablaufprogramm als Notprogramm gestartet.

Mit Hilfe dieses Notprogramms wird auf Basis der zuletzt bekannten Ein-/Ausgangsdaten ein Notbetrieb der jeweiligen Prozesseinrichtung weitergeführt. Damit ist sichergestellt, dass dieser (Teil-)Prozess in einen definierten Zustand gebracht wird, oder auch mit eingeschränkter Funktionalität weitergeführt werden kann. Dadurch können kritische Anlagenzustände vermieden werden. Darüber hinaus ist es möglich, dass diese intelligenten E/A-Stationen über das Kommunikationsnetzwerk 500 miteinander kommunizieren, um so einen abgestimmten Notbetrieb über die gesamte Anlage oder Teile davon zu gewährleisten. Durch entsprechende Ausstattung ausgewählter Prozesseinrichtungen können so dezentrale Redundanzinseln realisiert werden, durch welche die Anlagenverfügbarkeit erhöht werden kann.

Ein Datenaustausch zwischen den Prozesseinrichtungen erfolgt nur im Notbetrieb, wobei vorzugsweise eine entsprechende Kommunikationsverbindung erst während des Notbetriebs aufgebaut wird.

Im Notbetrieb können beispielsweise von der Prozesseinrichtung 300 Sensorsignale eines Messfühlers zur Füllstandsmessung eines Behälters eingelesen werden und zur Prozesseinrichtung 400 übertragen werden, welche in Abhängigkeit der Sensorsignale einen Zufluss in den Behälter regelt, indem ein über einen angeschlossenen Aktor gesteuertes Ventil angesteuert wird.

Bei einer Tunnelüberwachung kann beispielsweise von einer Steuereinrichtung in Abhängigkeit des Verkehrsaufkommens eine Signalanlage gesteuert werden, wobei verfügbare Fahrspuren variabel unterschiedlichen Fahrtrichtungen zugewiesen werden können. Bei einer solchen Tunnelüberwachung könnte in einem Notbetrieb ein Sensorsignal eines Rauchdetektors von der Prozesseinrichtung 300 eingelesen und zu der Prozesseinrichtung 400 übertragen werden, welche unter Ansprechen auf das Erkennen einer Rauchentwicklung eine Signalanlage derart steuert, dass ein weiteres Einfahren in den Tunnel verhindert wird.

Sobald wieder fehlerfreie Datentelegramme von einer Steuereinrichtung 100 bzw. 200 empfangen werden, wird dies von der jeweiligen Auswerteeinheit 310 bzw. 410 erkannt, und es wird automatisch vom Notbetrieb wieder auf den normalen transparenten Modus zurückgeschaltet.

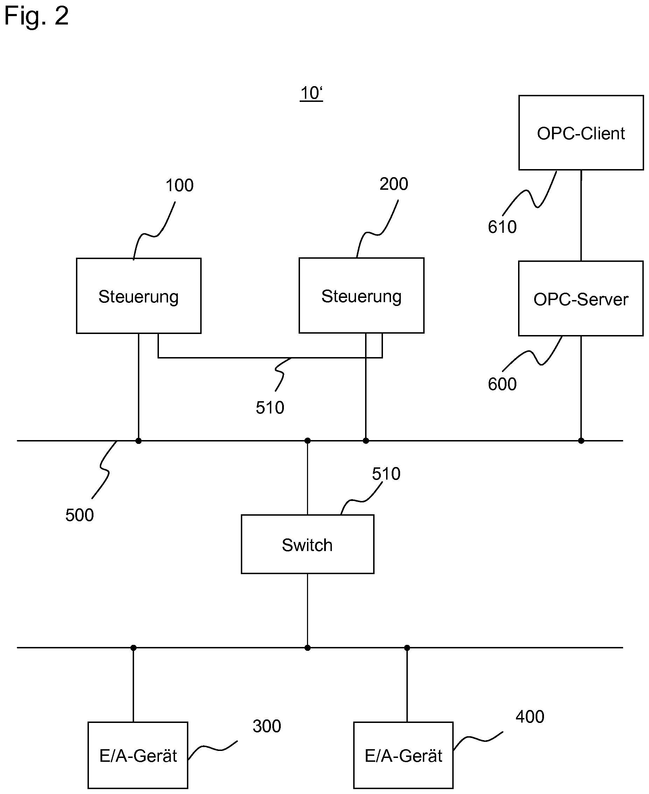

In Fig. 2 ist eine weitere beispielhafte Steuer- und Datenübertragungsanlage 10' dargestellt, welche zusätzlich zu der in Fig. 1 dargestellten Anlage 10 eine Einrichtung zum Beobachten und Bedienen des Prozesses in Form eines OPC-Servers 600 umfasst, der an das Kommunikationsnetz 500 angeschlossen ist. Der OPC-Server 600 ist über eine geeignete Verbindung mit einem beispielsweise in einem Leitstand angeordneten OPC-Client verbunden, über den ein Benutzer den Prozess visualisieren und bedienen kann.

Der OPC-Server 600 hat über das Kommunikationsnetz 500 ebenfalls einen direkten Zugriff auf die intelligenten Prozesseinrichtungen 300 und 400. Im Normalbetrieb verarbeitet der OPC-Server 600 die Daten von den überlagerten Steuereinrichtungen 100 und/oder 200. Die Daten der intelligenten Prozesseinrichtungen 300 und 400 sind zu diesem Zeitpunkt nicht gültig. Sollte das Notprogramm gestartet sein, so empfängt der OPC-Server 600 gültige Daten der intelligenten Prozesseinrichtungen 300 und 400. Auf diese Weise kann der Prozess über eine Visualisierung weiterhin bedient und beeinflusst werden.

Die vorliegende Erfindung ermöglicht eine Erhöhung der Verfügbarkeit eines Steuerungssystems, darauf basierend, dass die E/A-Stationen mit einem eigenen Laufzeitsystem ausgestattet bzw. bestehende E/A-Stationen durch Geräte mit eigenem Laufzeitsystem ersetzt werden.

Ein besonderer Vorteil der Erfindung ist darin zu sehen, dass der beschriebene Notbetrieb mit intelligenten E/A-Stationen auch unter Standardsteuerungen ohne Redundanzfunktion betrieben werden kann und so die Verfügbarkeit der Anlage erhöht.

## Patentansprüche

1. Steuer- und Datenübertragungsanlage (10) zur redundanten Prozesssteuerung, mit wenigstens einer Steuereinrichtung (100, 200) und wenigstens einer als Ein- und/oder Ausgabegerät ausgebildeten Prozesseinrichtung (300, 400), wobei die Steuereinrichtung (100, 200)im Normalbetrieb über ein Kommunikationsnetzwerk (500) mit der Prozesseinrichtung (300, 400) verbunden ist, und wobei die Prozesseinrichtung (300, 400)
- eine zum Detektieren eines Steuerungsausfalls ausgebildete Auswerteeinheit (310, 410),
- ein in einem Speicher (330, 430) der Prozesseinrichtung (300, 400) gespeichertes, parametrierbares Not-Steuerprogramm, und
- ein zum Ausführen des Not-Steuerprogramms ausgebildetes Laufzeitsystem (320, 420) umfasst, und wobei
die Prozesseinrichtung (300, 400) dazu ausgebildet ist, unter Ansprechen auf einen durch die Auswerteeinheit (310, 410) detektierten Steuerungsausfall in einen Notbetrieb zu wechseln, in welchem die Prozesseinrichtung (300, 400) das Not-Steuerprogramm ausführt, und wobei
die Prozesseinrichtung (300, 400) dazu ausgebildet ist, im Notbetrieb über das Kommunikationsnetzwerk (500) Daten mit wenigstens einer weiteren Prozesseinrichtung (300, 400) auszutauschen, wobei Daten, welche die Prozesseinrichtung (300, 400) von der weiteren Prozesseinrichtung (300, 400) empfängt, als Eingangsdaten dem Not-Steuerprogramm zugeführt und/oder vom Not-Steuerprogramm erzeugte Ausgangsdaten von der Prozesseinrichtung (300, 400) zu der weiteren Prozesseinrichtung (300, 400) übertragen werden.

2. Steuer- und Datenübertragungsanlage nach Anspruch 1, wobei die Auswerteeinheit (310, 410) der Prozesseinrichtung einen Steuerungsausfall detektiert, wenn
- für eine vorgegebene Zeitdauer kein Signal von der Steuereinrichtung empfangen wurde,
- ein fehlerhaftes Signal von der Steuereinrichtung empfangen wurde, und/oder
- ein Statussignal von der Steuereinrichtung empfangen wurde, welches einen Ausfall der Steuereinrichtung signalisiert.

3. Steuer- und Datenübertragungsanlage nach einem der Ansprüche 1 oder 2, wobei die Prozesseinrichtung (300, 400) dazu ausgebildet ist, während des Notbetriebs eine Kommunikationsverbindung zu der wenigstens einen weiteren Prozesseinrichtung (300, 400) aufzubauen.

4. Steuer- und Datenübertragungsanlage nach einem der Ansprüche 1 bis 3, umfassend wenigstens eine erste Steuereinrichtung (100) und eine zweite, zur ersten redundante Steuereinrichtung (200), wobei im Normalbetrieb beide Steuereinrichtungen (100, 200) mit der Prozesseinrichtung (300, 400) verbunden sind, und wobei die Prozesseinrichtung (300, 400) nur dann in den Notbetrieb wechselt, wenn die Auswerteeinheit (310, 410) für beide Steuereinrichtungen (100, 200) einen Steuerungsausfall detektiert.

5. Steuer- und Datenübertragungsanlage nach einem der Ansprüche 1 bis 4, wobei das von der Prozesseinrichtung (300, 400) ausgeführte Not-Steuerprogramm eine gegenüber einem von den Steuereinrichtungen (100, 200) ausgeführten Steuerprogramm andere und/oder reduzierte Funktionalität aufweist.

6. Steuer- und Datenübertragungsanlage nach einem der Ansprüche 1 bis 5, wobei das von der Prozesseinrichtung (300, 400) ausgeführte Not-Steuerprogramm dazu ausgebildet ist, die Prozesseinrichtung (300, 400) und/oder wenigstens eine weitere Prozesseinrichtung (300, 400) in einen sicheren Betriebszustand zu überführen.

7. Steuer- und Datenübertragungsanlage nach einem der Ansprüche 1 bis 6, ferner umfassend eine mit dem Kommunikationsnetzwerk verbundene Einrichtung (600, 610) zum Bedienen und/oder Überwachen, welche dazu ausgebildet ist, im Normalbetrieb mit der wenigstens einen Steuereinrichtung (100, 200) und im Notbetrieb mit der Prozesseinrichtung (300, 400) Daten auszutauschen.

8. Prozesseinrichtung, ausgebildet als Ein- und/oder Ausgabegerät, insbesondere als Feldgerät, welche über ein Kommunikationsnetzwerk (500) mit wenigstens einer Steuereinrichtung (100, 200) verbindbar und dazu ausgebildet ist, im Normalbetrieb von der Steuereinrichtung (100, 200) angesteuert zu werden, umfassend
- eine zum Detektieren eines Steuerungsausfalls ausgebildete Auswerteeinheit (310, 410),
- ein in einem Speicher (330, 430) der Prozesseinrichtung (300, 400) gespeichertes, parametrierbares Not-Steuerprogramm, und
- ein zum Ausführen des Not-Steuerprogramms ausgebildetes Laufzeitsystem (320, 420), wobei die Prozesseinrichtung (300, 400) ferner dazu ausgebildet ist, unter Ansprechen auf einen durch die Auswerteeinheit (310, 410) detektierten Steuerungsausfall in einen Notbetrieb zu wechseln, in welchem die Prozesseinrichtung (300, 400) das Not-Steuerprogramm ausführt, und wobei die Prozesseinrichtung (300, 400) dazu ausgebildet ist, im Notbetrieb über das Kommunikationsnetzwerk (500) Daten mit wenigstens einer weiteren Prozesseinrichtung (300, 400) auszutauschen, wobei Daten, welche die Prozesseinrichtung (300, 400) von der weiteren Prozesseinrichtung (300, 400) empfängt, als Eingangsdaten dem Not-Steuerprogramm zugeführt und/oder vom Not-Steuerprogramm erzeugte Ausgangsdaten von der Prozesseinrichtung (300, 400) zu der weiteren Prozesseinrichtung (300, 400) übertragen werden.

9. Verfahren zur redundanten Prozesssteuerung, wobei
- im Normalbetrieb wenigstens eine als Ein- und/oder Ausgabegerät ausgebildete Prozesseinrichtung (300, 400) von wenigstens einer mit der Prozesseinrichtung (300, 400) über ein Kommunikationsnetzwerk (500) verbundenen Steuereinrichtung (100, 200) angesteuert wird,
- ein Steuerungsausfall mittels einer Auswerteeinheit der Prozesseinrichtung (300, 400) detektiert wird,
- die Prozesseinrichtung (300, 400) unter Ansprechen auf einen durch die Auswerteeinheit (310, 410) detektierten Steuerungsausfall in einen Notbetrieb wechselt, in welchem die Prozesseinrichtung (300, 400) mittels eines Laufzeitsystems ein in einem Speicher (330, 430) der Prozesseinrichtung (300, 400) gespeichertes, parametrierbares Not-Steuerprogramm ausführt, wobei
die Prozesseinrichtung (300, 400) dazu ausgebildet ist, im Notbetrieb über das Kommunikationsnetzwerk (500) Daten mit wenigstens einer weiteren Prozesseinrichtung (300, 400) auszutauschen, wobei Daten, welche die Prozesseinrichtung (300, 400) von der weiteren Prozesseinrichtung (300, 400) empfängt, als Eingangsdaten dem Not-Steuerprogramm zugeführt und/oder vom Not-Steuerprogramm erzeugte Ausgangsdaten von der Prozesseinrichtung (300, 400) zu der weiteren Prozesseinrichtung (300, 400) übertragen werden.

## Claims

1. A control and data transmission system (10) for redundant process control, comprising at least one control device (100, 200) and at least one process device (300, 400) that is configured as an input and/or output device, wherein during normal operation the control device (100, 200) is connected to the process device (300, 400) via a communication network (500), and wherein the process device (300, 400) comprises:
- an evaluation unit (310, 410) adapted to detect a control failure;
- a parameterisable emergency control program stored in a memory (330, 430) of the process device (300, 400); and
- a run-time system (320, 420) adapted to execute the emergency control program; and wherein
the process device (300, 400) is adapted to switch to emergency operation in response to a control failure detected by the evaluation unit (310, 410), during which the process device (300, 400) performs the emergency control program; and wherein
the process device (300, 400) is adapted to exchange data with at least one further process device (300, 400) via the communication network (500) during emergency operation, wherein data received by the process device (300, 400) from the further process device (300, 400) are fed into the emergency control program as input data, and/or wherein output data generated by the emergency control program are transmitted from the process device (300, 400) to the further process device (300, 400).

2. The control and data transmission system according to claim 1, wherein the evaluation unit (310, 410) of the process device detects a control failure if:
- no signal has been received from the control device for a predefined time period;
- a faulty signal has been received from the control device; and/or
- a status signal signalling a failure of the control device has been received from the control device.

3. The control and data transmission system according to any one of claims 1 or 2, wherein the process device (300, 400) is adapted to establish a communication link to the at least one further process device (300, 400) during the emergency operation.

4. The control and data transmission system according to any one of claims 1 to 3, comprising at least a first control device (100) and a second control device (200) redundant to the first control device, wherein during normal operation both control devices (100, 200) are connected to the process device (300, 400) and wherein the process device (300, 400) switches to the emergency operation only if the evaluation unit (310, 410) detects a control failure for both control devices (100, 200).

5. The control and data transmission system according to any one of claims 1 to 4, wherein the emergency control program executed by the process device (300, 400) has a different and/or reduced functionality compared to a control program executed by the control devices (100, 200).

6. The control and data transmission system according to any one of claims 1 to 5, wherein the emergency control program executed by the process device (300, 400) is adapted to transfer the process device (300, 400) and/or at least one further process device (300, 400) into a safe operating state.

7. The control and data transmission system according to any one of claims 1 to 6, further comprising a device (600, 610) for operating and/or monitoring, which is connected to the communication network and adapted to exchange data with the at least one control device (100, 200) during normal operation, and to exchange data with the process device (300, 400) during emergency operation.

8. A process device, configured as an input and/or output device, in particular as a field device, which is connectable to at least one control device (100, 200) via a communication network (500), and which is adapted to be controlled by the control device (100, 200) during normal operation, comprising:
- an evaluation unit (310, 410) adapted to detect a control failure;
- a parameterisable emergency control program stored in a memory (330, 430) of the process device (300, 400); and
- a run-time system (320, 420) adapted to execute the emergency control program; wherein
the process device (300, 400) is further adapted to switch to emergency operation in response to a control failure detected by the evaluation unit (310, 410), in which the process device (300, 400) executes the emergency control program; and wherein
the process device (300, 400) is adapted to exchange data with at least one further process device (300, 400) via the communication network (500) during emergency operation;
wherein data received by the process device (300, 400) from the further process device (300, 400) are fed into the emergency control program as input data, and/or wherein output data generated by the emergency control program are transmitted from the process device (300, 400) to the further process device (300, 400).

9. A method for redundant process control, wherein
- during normal operation, at least one process device (300, 400) configured as an input and/or output device is controlled by at least one control device (100, 200) connected to the process device (300, 400) via a communication network (500);
- a control failure is detected by an evaluation unit of the process device (300, 400);
- in response to a control failure detected by the evaluation unit (310, 410), the process device (300, 400) switches to an emergency operation during which the process device (300, 400) executes a parameterisable emergency program using a run-time system that is stored in a memory (330, 430) of the process device (300, 400); wherein the process device (300, 400) is adapted to exchange data with at least one further process device (300, 400) via the communication network (500) while in the emergency operation mode; wherein
data received by the process device (300, 400) from the further process device (300, 400) are fed into the emergency control program as input data, and/or wherein output data generated by the emergency control program are transmitted from the process device (300, 400) to the further process device (300, 400).

## Revendications

1. Système de commande et de transmission de données (10) pour la commande redondante de traitement, comprenant au moins un dispositif de commande (100, 200) et au moins un dispositif de traitement (300, 400) réalisé sous la forme d'un appareil d'entrée et/ou de sortie, dans lequel le dispositif de commande (100, 200) est relié en mode normal au dispositif de traitement (300, 400) par l'intermédiaire d'un réseau de communication (500), et dans lequel le dispositif de traitement (300, 400) comprend :
- une unité d'évaluation (310, 410) conçue pour détecter une panne de commande,
- un programme de commande de secours paramétrable, mis en mémoire dans une mémoire (330, 430) du dispositif de traitement (300, 400), et
- un système d'exécution (320, 420) conçu pour exécuter le programme de commande de secours, et
où :
le dispositif de traitement (300, 400) est conçu pour, en réponse à une panne de commande détectée par l'unité d'évaluation (310, 410), passer dans un mode de secours dans lequel le dispositif de traitement (300, 400) exécute le programme de commande de secours, et où le dispositif de traitement (300, 400) est conçu pour, en mode de secours, échanger des données avec au moins un autre dispositif de traitement (300, 400) par l'intermédiaire du réseau de communication (500), où les données, que le dispositif de traitement (300, 400) reçoit de l'autre dispositif de traitement (300, 400), sont amenées en tant que données d'entrée au programme de commande de secours et/ou les données de sortie générées par le programme de commande de secours sont transmises par le dispositif de traitement (300, 400) à l'autre dispositif de traitement (300, 400).

2. Système de commande et de transmission de données selon la revendication 1, dans lequel l'unité d'évaluation (310, 410) du dispositif de traitement détecte une panne de commande, si
- pendant une durée prédéfinie, aucun signal n'a été reçu par le dispositif de commande,
- un signal de défaillance a été reçu par le dispositif de commande, et/ou
- un signal de statut a été reçu par le dispositif de commande, lequel indique une panne du dispositif de commande.

3. Système de commande et de transmission de données selon l'une quelconque des revendications 1 et 2, dans lequel le dispositif de traitement (300, 400) est conçu pour, pendant le mode de secours, établir une liaison de communication avec ledit au moins un autre dispositif de traitement (300, 400).

4. Système de commande et de transmission de données selon l'une quelconque des revendications 1 à 3, comprenant au moins un premier dispositif de commande (100) et un deuxième dispositif de commande (200) redondant par rapport au premier dispositif de commande, dans lequel les deux dispositifs de commande (100, 200), en mode normal, sont reliés au dispositif de traitement (300, 400), et dans lequel le dispositif de traitement (300, 400) ne passe dans le mode de secours que lorsque l'unité d'évaluation (310, 410) détecte une panne de commande pour les deux dispositifs de commande (100, 200).

5. Système de commande et de transmission de données selon l'une quelconque des revendications 1 à 4, dans lequel le programme de commande de secours exécuté par le dispositif de traitement (300, 400) présente une fonctionnalité différente et/ou réduite par rapport à un programme de commande exécuté par les dispositifs de commande (100, 200).

6. Système de commande et de transmission de données selon l'une quelconque des revendications 1 à 5, dans lequel le programme de commande de secours exécuté par le dispositif de traitement (300, 400) est conçu pour faire passer le dispositif de traitement (300, 400) et/ou au moins un autre dispositif de traitement (300, 400) dans un mode de fonctionnement sûr.

7. Système de commande et de transmission de données selon l'une quelconque des revendications 1 à 6, comprenant en outre un dispositif (600, 610) de commande et/ou de surveillance qui est relié au réseau de communication et qui est conçu pour, en mode normal, échanger des données avec ledit au moins un dispositif de commande (100, 200) et, en mode de secours, avec le dispositif de traitement (300, 400).

8. Dispositif de traitement, réalisé sous la forme d'un appareil d'entrée et/ou de sortie, en particulier sous la forme d'un appareil de terrain, lequel peut être relié à un dispositif de commande (100, 200) par l'intermédiaire d'un réseau de communication (500) et est conçu pour, en mode normal, être commandé par le dispositif de commande (100, 200), comprenant :
- une unité d'évaluation (310, 410) conçue pour détecter une panne de commande,
- un programme de commande de secours paramétrable mis en mémoire dans une mémoire (330, 430) du dispositif de traitement (300, 400), et
- un système d'exécution (320, 420) conçu pour exécuter le programme de commande de secours,
où :
le dispositif de traitement (300, 400) est conçu en outre pour, en réponse à une panne de commande détectée par l'unité d'évaluation (310, 410), passer dans un mode de secours dans lequel le dispositif de traitement (300, 400) exécute le programme de commande de secours, et où le dispositif de traitement (300, 400) est conçu pour, en mode de secours, échanger des données avec au moins un autre dispositif de traitement (300, 400) par l'intermédiaire du réseau de communication (500), où les données, que le dispositif de traitement (300, 400) reçoit de l'autre dispositif de traitement (300, 400), sont amenées en tant que données d'entrée au programme de commande de secours et/ou les données de sortie générées par le programme de commande de secours sont transmises par le dispositif de traitement (300, 400) à l'autre dispositif de traitement (300, 400).

9. Procédé de commande redondante de traitement, dans lequel :
- en mode normal, au moins un dispositif de traitement (300, 400) réalisé sous la forme d'un appareil d'entrée et/ou de sortie est commandé par au moins un dispositif de commande (100, 200) relié au dispositif de traitement (300, 400) par l'intermédiaire d'un réseau de communication (500),
- une panne de commande est détectée au moyen d'une unité d'évaluation du dispositif de traitement (300, 400),
- le dispositif de traitement (300, 400), en réponse à une panne de commande détectée par l'unité d'évaluation (310, 410), passe dans le mode de secours, dans lequel le dispositif de traitement (300, 400) exécute un programme de commande de secours paramétrable mis en mémoire dans une mémoire (330, 430) du dispositif de traitement (300, 400) au moyen d'un système d'exécution,
où :
le dispositif de traitement (300, 400) est conçu, en mode de secours, pour échanger des données avec au moins un autre dispositif de traitement (300, 400) par l'intermédiaire du réseau de communication (500), où les données, que le dispositif de traitement (300, 400) reçoit de l'autre dispositif de traitement (300, 400), sont amenées en tant que données d'entrée au programme de commande de secours et/ou les données de sortie générées par le programme de commande de secours sont transmises par le dispositif de traitement (300, 400) à l'autre dispositif de traitement (300, 400).
